# EUROPÄISCHE PATENTSCHRIFT

(11) **EP 0 736 993 B1**
(45) Veröffentlichungstag und Bekanntmachung des Hinweises auf die Patenterteilung: **21.11.2001**
(21) Anmeldenummer: 95103517.9
(22) Anmeldetag: 10.03.1995
(51) Int. Cl.: H04M 3/20, H04M 3/42, H04M 3/22

(54) **Verfahren zur gezielten Überwachung von Fernsprechverbindungen in einer übergeordneten Überwachungszentrale**
Method for monitoring specific telephone connections in a central monitoring unit
Méthode pour la surveillance ciblée de connexions téléphoniques dans une unité de surveillance centrale

(43) Veröffentlichungstag der Anmeldung: 09.10.1996
(73) Patentinhaber: SIEMENS AKTIENGESELLSCHAFT, 80333 München (DE)
(72) Erfinder: Kuhn, Wolfgang, Dipl.-Ing., D-82131 Stockdorf (DE); Käss, Manfred, D-81247 München (DE)

(56) Entgegenhaltungen:
- EP-A- 0 161 031
- EP-A- 0 218 862
- CH-A- 681 409
- DE-A- 2 520 925

## Beschreibung

Die Erfindung betrifft ein Verfahren zur gezielten Überwachung von Fernsprechverbindungen in einer übergeordneten Überwachungszentrale.

Die Überwachung von Fernsprechverbindungen durch hierzu ermächtigte Institutionen gewinnt insbesondere im Zuge der vorbeugenden Verbrechensbekämpfung zunehmend an Bedeutung.

Von Interesse ist in diesem Zusammenhang in erster Linie die Überwachung von einer übergeordneten Überwachungszentrale aus, die sich typischerweise am Sitz der die überwachten Fernsprechverbindungen auswertenden Institution befindet. Bei solchen Überwachungen sollen nicht nur die Inhalte der geführten Ferngespräche überprüft und festgehalten werden, sondern es sollen auch Daten überprüfbar sein, die Auskunft über das Umfeld und das Verhalten der die überwachten Fernsprechverbindungen führenden Fernsprechteilnehmer geben. Die Überwachungen sollen derart durchgeführt werden können, daß sich die für die betroffenen Fernsprechteilnehmer wahrnehmbaren Umstände bei solchen überwachten Fernsprechverbindungen nicht spürbar von denjenigen üblicher nichtüberwachter Fernsprechverbindungen unterscheiden.

Die Aufgabe der Erfindung besteht darin, ein seitens der Betreiber von Fernmeldenetzen zur Verfügung zu stellendes Verfahren anzugeben, das diesen Anforderungen möglichst gut gerecht wird.

Ein solches der Lösung der Erfindung dienendes Verfahren ist durch die im Kennzeichen des Patentanspruchs 1 angegebenen Merkmale gekennzeichnet.

Aufgrund des erfindungsgemäßen Verfahrens wird im Falle der Überwachung einer Fernsprechverbindung der überwachenden Zentrale außer der Möglichkeit des Abhörens der Gespräche der überwachten Verbindungen einer Reihe von Daten zur Verfügung gestellt, die über die Identifizierung der beteiligten Fernsprechteilnehmer hinaus Rückschlüsse auf das Zustandekommen der Fernsprechverbindung zulassen. Solche Daten werden auch dann zur Verfügung gestellt, wenn die Fernsprechverbindung nicht zustande kommt, weil sich beispielsweise der angerufene Teilnehmer nicht meldet.

Es ist gewährleistet, daß der Verbindungsaufbau von Verbindungen, an denen zu überwachende Teilnehmer beteiligt sind, nicht merklich länger dauert als der Verbindungsaufbau von Normalverbindungen.

Die Implementierung der für die Überwachung erforderlichen Prozeduren kann mit relativ geringem Aufwand an Änderungen der vermittlungsstelleninternen Steuerungsabläufe erfolgen.

Weitere Ausgestaltungen der Erfindung sind in Unteransprüchen gekennzeichnet.

In den Unteransprüchen 2 und 3 ist angegeben, wie im Falle einer Anrufumleitung durch einen zu überwachenden Teilnehmer und im Falle einer weiteren Anrufumleitung vorzugehen ist. Es werden demnach für die Teilverbindungen vom rufenden Teilnehmer zu dem zu überwachenden Teilnehmer, der die Rufumleitung eingeleitet hat bzw. einer weiteren Teilverbindung zu einem weiteren eine Rufumleitung veranlassenden Teilnehmer und für die Teilverbindung zu dem Teilnehmer, der letzlich der gerufene Teilnehmer ist, gesondert Anfangs- und Endedatenblöcke übertragen, aus deren Gesamtinhalt die Teilnehmernummern sämtlicher an der Rufumleitungskette beteiligter Teilnehmer hervorgehen.

Im Anspruch 4 ist angegeben, wie bei einer Zweierverbindung zwischen zwei an dieselbe Fernsprechvermittlungsstelle angeschlossenen Teilnehmern zu verfahren ist, wenn beide Teilnehmer zu überwachen sind. In diesem Falle werden zwei Verbindungen zu der übergeordneten Überwachungszentrale hergestellt, wobei die Anfangs- und Endedatenblöcke so besetzt sind, daß ein einzelner Teilnehmer in einem Falle als zu überwachender Teilnehmer und im anderen Falle als nicht zu überwachender Teilnehmer in Erscheinung tritt.

Gemäß Anspruch 5 erfolgt die Übertragung der Daten der Anfangs- und Endedatenblöcke in Form von Mehrfrequenzencodezeichen.

In den Ansprüchen 6 und 7 ist eine unterschiedliche Handhabung beim Verbindungsaufbau im Falle der Überwachung von Fernsprechverbindungen einerseits und im Falle der Überwachnung von FAX-Verbindungen und Verbindungen zur Datenübertragung andererseits angegeben. Es kann damit der Forderung Rechnung getragen werden, daß der Verbindungsaufbau zum B-Teilnehmer überwachter Fernsprechverbindungen praktisch genauso schnell vor sich gehen soll, wie bei nicht überwachten Verbindungen und daß demgegenüber bei FAX- und Datenverbindungen stattdessen der vollständige Empfang der übertragenen Informationen gewährleistet ist.

Im Anspruch 8 ist angegeben, wie eine Vergebührung einer Überwachung erfolgen kann.

Im Anspruch 9 ist angegeben wie verfahren wird, wenn im Zuge der erwähnten Konferenzschaltung eine Verbindung zu der Überwachungszentrale nicht herstellbar ist. Es wird dann, sofern vorhanden, von einer X25-Schnittstelle zur Übertragung von Datenblöcken Gebrauch gemacht, so daß in der Überwachungszentrale wenigstens Informationen über das Vorhandensein von sämtlichen Verbindungen, an denen ein zu überwachender Teilnehmer beteiligt ist, zur Verfügung stehen.

Nachstehend wird die Erfindung anhand eines Ausführungsbeispiels unter Bezugnahme auf eine Zeichnung näher erläutert. In der Zeichnung zeigen:
Figur 1 ein Strukturbild eines Fernmeldenetzes zusammen mit einem Überwachungszentrum und mit der Konfiguration der bei einer Überwachung beteiligten Steuereinheiten einer der Vermittlungsstellen des Fernmeldenetzes.
Figur 2 die Hardware-Konfiguration einer Vermittlungsstelle, an die ein zu überwachender Teilnehmer angeschlossen ist,
Figur 3 eine entsprechende Hardwarekonfiguration zur Veranschaulichung der Verhältnisse wenn beide Teilnehmer überwacht werden.
Figuren 4 und 5 den Aufbau der erfindungsgemäß zum Überwachungszentrum hin übertragenen Anfangsdatenblöcke und Endedatenblöcke.

Die Überwachung von Verbindungen zwischen zwei Fernsprechteilnehmern findet immer in derjenigen Vermittlungsstelle statt, an der der zu überwachende Teilnehmer angeschlossen ist, je nach dem ob der A-Teilnehmer oder B-Teilnehmer zu überwachen ist, also in der Ursprungsvermittlungsstelle oder in der Zielvermittlungsstelle

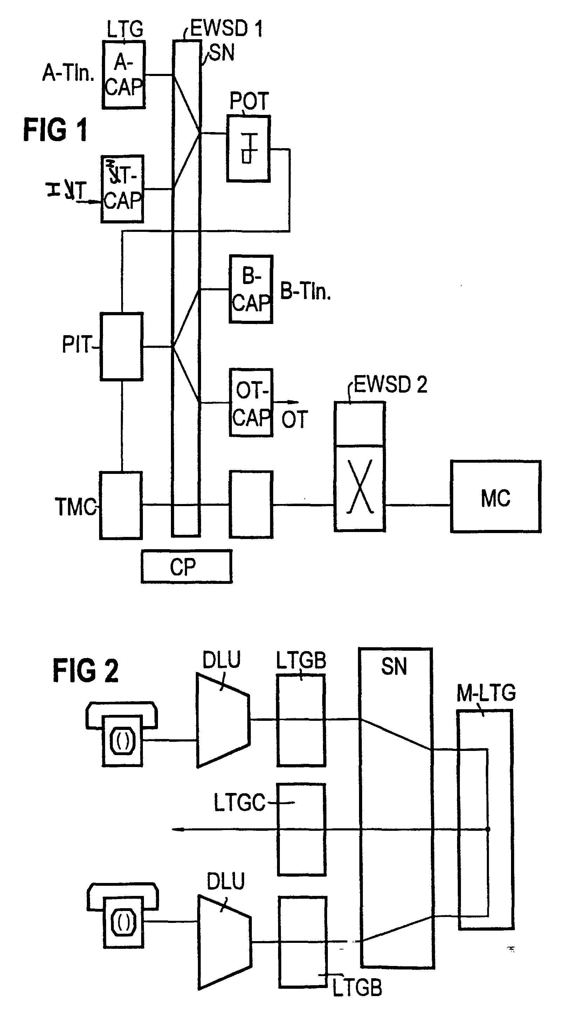

In der Figur 1 ist mit EWSD1 eine solche Ursprungs- oder Zielvermittlungsstelle und mit EWSD2 eine Durchgangsvermittlungsstelle angedeutet, an die eine übergeordnete Überwachungszentrale MC angeschlossen ist.

Bei der Vermittlungsstelle EWSD1 sind neben einem zentralen Koppelfeld SN und einer zentralen Steuerung CP eine Reihe von Programmsteuermodule angedeutet. Diese stehen in Zusammenhang mit dem Verbindungsaufbau zwischen direkt an das Amt angeschlossener Teilnehmer oder zwischen einem Teilnehmer und von einer anderen Vermittlungsstelle kommenden oder zu einer anderen Vermittlungsstelle hinführenden Anschlußleitung. Für den Fall eines direkt angeschlossenen A-Teilnehmers oder B-Teilnehmers sind dies die Programmodule A-CAP, B-CAP, für den Fall einer ankommenden Anschlußleitung IT oder einer abgehenden Anschlußleitung OT sind dies die Steuermodule IT-CAP oder OT-CAP. Spezifisch für die Überwachung solcher Fernsprechverbindungen sind der Programmsteuermodul POT, der einem gesonderten Anschluß für abgehende Übertragungsrichtung des Koppelnetzes SN zugeordnet ist, der Programmsteuermodul PIT, der einem gesonderten Anschluß für ankommende Übertragungsrichtung des Koppelfeldes zugeordnet ist, sowie der Programmsteuermodul TMC, der für denjenigen Anschluß für abgehende Übertragungsrichtung des Koppelfeldes maßgeblich ist, über den eine Verbindung mit der übergeordneten Überwachungszentrale MC hergestellt werden kann.

Anhand der Figur 1 lassen sich folgende Überwachungsfälle veranschaulichen:
1. die Überwachung findet in der Ursprungsvermittlungsstelle statt, es wird also ein A-Teilnehmer überwacht. Die B-Seite der Verbindung ist in diesem Falle die abgehende Verbindungleitung OT.
2. die Überwachung findet in der Zielvermittlungsstelle statt. Es wird also der B-Teilnehmer überwacht, in diesem Falle ist die A-Seite der zu überwachenden Verbindung die ankommende Verbindungsleitung IT.
3. es wird eine Internverbindung überwacht, also eine Verbindung zwischen dem an eine Vermittlungsstelle angeschlossenen A-Teilnehmer und dem an dieselbe Vermittlungstelle angeschlossenen B-Teilnehmer.

Bei einer Internverbindung ist es auch möglich, das sowohl für den A-Teilnehmer als auch für den B-Teilnehmer ein Überwachungsauftrag vorliegt.

In der Datenbasis der einzelnen Vermittlungsstellen ist (paßwortgeschützt) festgelegt, welche der angeschlossenen Teilnehmer überwacht werden sollen, ferner ist die Teilnehmernummer hinterlegt, unter der die übergeordnete Überwachungszentrale erreicht werden kann.

Beim Aufbau einer Verbindung, an der ein zu überwachender Teilnehmer beteiligt ist, wird also die zentrale Steuerung CP der betreffenden Vermittlungsstelle dies erkennen und anstelle der üblichen in Zusammenhang mit dem Verbindungsaufbau stehenden Prozeduren, die zu einer direkten Durchschaltung von A-Seite zu B-Seite führen, eine Sonderprozedur einleiten, durch die innerhalb der Vermittlungsstelle eine Überwachungsschleife gebildet wird. Dies ist in der Figur 1 dadurch angedeutet, daß eine Verbindungsherstellung beispielsweise eine Internverbindung zwischen einem A-Teilnehmer und einem B-Teilnehmer nicht direkt zwischen den Koppelfeldanschlüssen geschaltet wird, an denen die für die betrachteten Teilnehmer maßgeblichen Anschlußgruppen liegen, sondern die erwähnten Steuermodule POT, PIT und TMC mit in den Verbindungsaufbau einbezogen werden. Bei dieser Schleifenbildung erfolgt ein Verbindungsaufbau zur Überwachungszentrale, der, wie dargestellt, über eine oder mehrere Durchgangsvermittlungsstellen führen kann, in Form der Bildung einer Dreierkonferenz zwischen dem A-Teilnehmer, dem B-Teilnehmer und der Überwachungszentrale MC, bei der jedoch die Verbindung zur Überwachungszentrale nur einseitg zu dieser hin gerichtet ist. Für die Bildung dieser Dreierkonferenz ist der Programmsteuermodul POT verantwortlich.

Die geschilderte Verbindungskonstellation wird auch aus der Figur 2 ersichtlich, in der die beteiligten Hardware-Einheiten einer Vermittlungsstelle dargestellt sind, nämlich neben dem zentralen Koppelnetz SN und der zentralen Steuerung CP konzentrierende digitale Leitungseinheiten DLU und Anschlußeinheiten LTGB für den Anschluß von Teilnehmern, sowie eine Anschlußeinheit LTGC für den Anschluß einer zu einer Überwachungszentrale führenden Verbindungsleitung. Aus dieser Darstellung wird auch ersichtlich, daß für die Schleifenbildung bzw. die Herstellung der Dreierkonferenzverbindung eine weitere Anschlußeinheit M-LTG vorgesehen ist.

Sobald die Verbindung zur übergeordneten Überwachungszentrale hergestellt ist, wird noch vor Beginn der Gesprächsübertragung im Zuge der Konferenzverbindung von der Vermittlungsstelle aus, an der der zu überwachende Teilnehmer angeschlossen ist, ein Anfangsdatenblock gesendet.

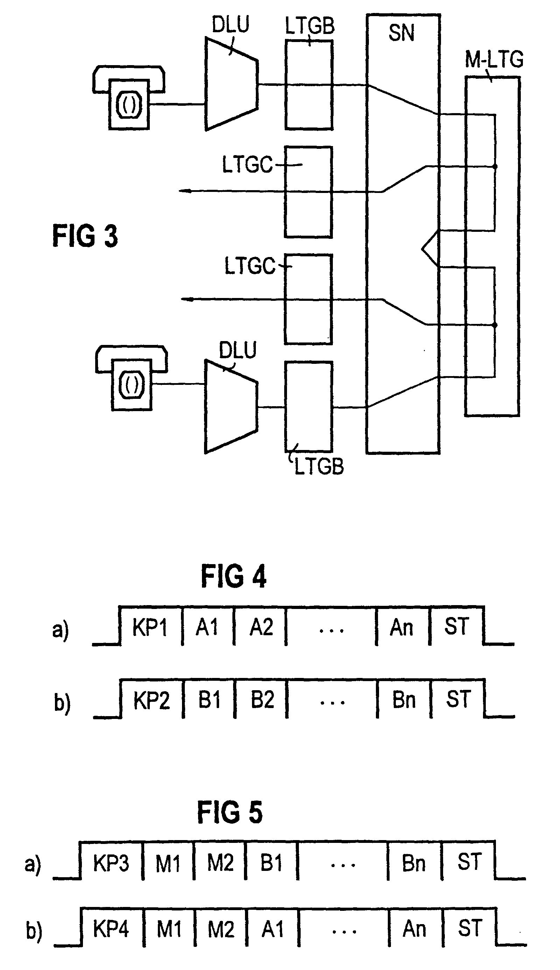

Wie die Figur 4 zeigt, enthält ein solcher Anfangsdatenblock eine Angabe KP1 oder KP2 darüber, ob der A-Teilnehmer oder der B-Teilnehmer der Verbindung überwacht wird. Ferner enthält er die Teilnehmernummer A1 bis An oder B1 bis Bn des zu überwachenden Teilnehmers und schließlich eine Endezeichen ST.

Die Übertragung dieses Anfangsdatenblockes erfolgt mit dem In-band-Zeichengabeverfahren in Form von Mehrfrequenzen-Codezeichen, vorzugsweise MFC-R2-Signalen. Ein Zwangslauf besteht nicht. Die MFC-R2 Zeichen werden gepulst im Verhältnis 50/50 gesendet.

An die Übersendung des Anfangsdatenblockes schließt sich die eigentliche Sprachübertragung bzw. stattdessen die Übertragung von FAX-Informationen an.

Nach Auslösung der zu überwachenden Verbindungen, jedoch noch vor der nachfolgenden Auslösung der Verbindung zur übergeordneten Überwachungszentrale MC wird ebenfalls in Form einer In-band-Signalisierung mittels Mehrfrequenzencodezeichen ein Endedatenblock zu der Überwachungszentrale hin übertragen.

Wie die Figur 5 zeigt, weist ein Endedatenblock folgenden Inhalt auf:

Am Anfang des Blocks steht eine Blockkennung KP3. Es schließt sich ein Datenfeld M1 an, das Angaben über den Durchschaltezustand der zu überwachenden Verbindung sowie Angaben darüber enthält, ob es sich um einen nationalen oder internationalen Anruf gehandelt hat. Als Angaben über den Durchschaltezustand kommen Angaben in Frage, ob die zu überwachende Verbindung erfolgreich zustandegekommen ist und ob der angerufene Teilnehmer abgehoben hat, ob der angerufene Teilnehmer besetzt war und dergleichen. Nachstehend wird ein Beispiel für den Inhalt des Datenfeldes M1 gegeben. M1 kann die folgenden Werte haben:
1: nationaler Anruf, erfolgreich mit Antwort
2: nationaler Anruf, erfolgreich ohne Antwort
3: nationaler Anruf, nicht erfolgreich, Teilnehmer besetzt
4: nationaler Anruf, gassenbesetzt
5: nationaler Anruf, nicht erfolgreich, andere Gründe
9: internationaler Anruf, erfolgreich mit Antwort
10: internationaler Anruf, erfolgreich ohne Antwort
11: internationaler Anruf, nicht erfolgreich, Teilnehmer besetzt
12: internationaler Anruf, nicht erfolgreich, gassenbesetzt
13: internationaler Anruf, nicht erfolgreich, andere Gründe

Im nächsten Datenfeld M2 enthält der Endedatenblock eine Information darüber, ob es sich bei der überwachten Verbindung um eine Normalverbindung oder um eine nach Anrufumleitung zustande gekommene Verbindung handelt.

Schließlich folgen je nach dem ob der A-Teilnehmer oder der B-Teilnehmer zu überwachen war, die Teilnehmernummer A1 bis An oder B1 bis Bn des jeweiligen nicht zu überwachenden Partner-Teilnehmers.

Der Endedatenblock wird durch ein Endezeichen ST abgeschlossen.

Im Falle einer Rufumleitung durch einen zu überwachenden Teilnehmer werden für beide Teilverbindungen jeweils ein Anfangsdatenblock und ein Endedatenblock übertragen. Im Anfangsdatenblock der ersten Teilverbindung, also der Teilverbindung vom A-Teilnehmer zu dem B-Teilnehmer, der die Rufumleitung veranlaßt hat, ist mit KP2 die Angabe enthalten, daß der B-Teilnehmer überwacht wird und nachfolgend die Teilnehmernummer dieses B-Teilnehmers. Im dazugehörigen Endedatenblock ist durch M2 gekennzeichnet, daß es sich um eine Verbindung mit Rufumleitung handelt und als Partnerteilnehmernummer ist die Teilnehmernummer des A-Teilnehmers enthalten. Im Anfangsdatenblock der zweiten Teilverbindung, also der Verbindung von dem zu überwachenden Teilnehmer, der für diese Teilverbindung der A-Teilnehmer ist, zu dem Teilnehmer, zu dem die Rufumleitung geführt hat, ist die Teilnehmernummer dieses zu überwachenden Teilnehmers enthalten. Im entsprechenden Endedatenblock ist auch durch M2 die Angabe enthalten, daß es sich um eine durch Rufumleitung zustandegekommene Verbindung handelt und als Teilnehmernummer diejenige des Teilnehmers, zu dem die Rufumleitung geführt hat.

Im Falle einer doppelten Rufumleitung, wobei vorausgesetzt ist, daß beide eine Rufumleitung auslösende Teilnehmer an dieselbe Vermittlungsstelle angeschlossen sind, werden Datenblockpaare für drei Teilverbindungen übertragen. Der Anfangsdatenblock enthält die Teilnehmernummer des erwähnten gerufenen Teilnehmers und die Angabe, daß der B-Teilnehmer überwacht wird. Der Endedatenblock dieser ersten Teilverbindung enthält die Teilnehmernummer des rufenden, nicht überwachten Teilnehmers und die Angabe, daß es sich hier um eine Verbindung mit Rufumleitung handelt.

Für die zweite Teilverbindung zwischen dem erwähnten überwachten, die erste Rufumleitung auslösenden Teilnehmer und dem Teilnehmer, zu dem diese Rufumleitung führt und der seinerseits eine weitere Rufumleitung ausgelöst hat werden zwei Paare von Anfangs- und Endedatenblöcke übertragen. Der erste Anfangsdatenblock enthält die Rufnummer des genannten ersten Teilnehmers, der hier in der Rolle eines A-Teilnehmers erscheint, so daß dieser Anfangsdatenblock ferner den Hinweis auf die Überwachung des A-Teilnehmers der zweiten Teilverbindung enthält. Der erste Endedatenblock der zweiten Teilverbindung enthält die Teilnehmernummer des Teilnehmers, auf den der erste umleitende Teilnehmer umgeleitet hat zusammen mit dem Hinweis, daß es sich um eine Verbindung mit Rufumleitung handelt. Der zweite Anfangsdatenblock dieser zweiten Teilverbindung enthält die Rufnummer des letztgenannten Teilnehmers in seiner Eigenschaft als überwachter B-Teilnehmer. Im zweiten Endedatenblock der zweiten Teilverbindung ist schließlich die Teilnehmernummer des ersten umleitenden Teilnehmers enthalten, der hier als nicht überwachter Partnerteilnehmer auftritt, ferner ist der Hinweis auf eine durch Umleitung zustande gekommene Verbindung enthalten.

Im Anfangsdatenblock der dritten Teilverbindung ist schließlich die Teilnehmernummer des zweiten umleitenden Teilnehmers in seiner Eigenschaft als überwachter A-Teilnehmer enthalten, und der zweite Endedatenblock enthält die Teilnehmernummer des B-Teilnehmers zu dem schließlich die Umleitung führt zusammen mit dem Hinweis auf eine umgeleitete Verbindung.

Sofern bei einer Verbindung zwischen an der Vermittlungsstelle angeschlossenen Teilnehmern beide Teilnehmer zu überwachende Teilnehmer sind, werden, wie dies in Figur 3 veranschaulicht ist, in Kaskade geschaltete Schleifen über die Anschlußeinheit M-LTG und demnach zwei Dreierkonferenzverbindungen mit jeweils einer einseitig zum Überwachungszentrum führenden Verbindung hergestellt. In den über die beiden zuletzt genannten Verbindungen übertragenen Anfangs- und Endedatenblöcken erscheinen die beteiligten Teilnehmer jeweils einmal als überwachter Teilnehmer und einmal als nicht überwachter Partnerteilnehmer. Eine Bildung zweier in Kaskade geschalteter Dreierkonferenzen entsprechend Figur 3 wird auch dann vorgenommen, wenn eine Überwachung an zwei verschiedenen Überwachungszentren vorgenommen werden soll. Die Anfangs- und Endedatenblöcke, die zu den beiden Überwachungszentren übertragen werden, haben dann natürlich jeweils denselben Inhalt.

Wenn sowohl eine Überwachung durch zwei Überwachungszentren vorgenommen werden soll, als auch beide Teilnehmer einer betroffenen Verbindung zu überwachende Teilnehmer sind, würden in entsprechender Fortführung der vorgenannten beiden Fälle sogar vier in Kaskaden geschaltete Dreierkonferenzverbindungen aufgebaut werden, von denen jeweils zwei zu einem Überwachungszentrum führen.

Bei der obenerwähnten Herstellung einer Dreierverbindung zwischen den Partnern der zu überwachenden Verbindung und der Überwachungszentrale wird, sofern es sich um Fernsprechverbindungen handelt, der Verbindungsaufbau zum B-Teilnehmer der zu überwachenden Verbindung und der Aufbau der Verbindung mit der Überwachungszentrale zeitgleich durchgeführt, um zu erreichen, daß der Verbindungsaufbau nicht länger dauert als bei einer normalen Zweierverbindung. Sofern es sich bei der zu überwachenden Verbindung jedoch um eine FAX-Verbindung handelt, wird zuerst die Verbindung zur Überwachungszentrale hindurchgeschaltet, bevor die Verbindung zum B-Teilnehmer hergestellt wird. Der Grund hierfür liegt darin, daß bei FAX-Verbindungen auf jeden Fall der den Sprachinformationen vorangehende, die FAX-spezifischen Kennungen enthaltende Kopfteil in der Überwachungszentrale empfangen werden muß, wogegen eine geringfügige Verzögerung des Verbindungsaufbaus zum B-Teilnehmer gegenüber einer nicht überwachten Verbindung ohne weiteres hingenommen werden kann.

Es kann vorgesehen sein, die Überwachungsverbindung zu Lasten der Überwachungszentrale zu vergebühren. Dabei wird die Verbindung zwischen dem zu überwachenden Teilnehmer und der Überwachungszentrale zugrundegelegt und eine Gebührenerfassung durch Einzelgesprächsregistrierung vorgenommen. Zur Vorbereitung der entsprechenden Prozeduren werden dem Zentralprozessor der Vermittlungsstelle, an die das Überwachungszentrum angeschlossen ist, die Teilnehmernummer des Überwachungszentrum als A-Nummer und die Teilnehmernummer des zu überwachenden Teilnehmers als B-Nummer zur Verfügung gestellt. Im Zuge des weiteren Ablaufs der Verbindungsherstellung erhalten die genannten Teilnehmernummern wieder den Zustand ihrer tatsächlichen Bedeutung.

Für Fälle, in denen sich im Zuge einer Verbindungsüberwachung eine Fernsprechverbindung zwischen der Vermittlungsstelle, an die das Überwachungszentrum angeschlossen ist und dem Überwachungszentrum eine Fernsprechverbindung nicht herstellen läßt, also eine vollständige Überwachung nicht möglich ist, kann vorgesehen sein, über eine Geräteschnittstelle (X-25-Schnittstelle vom Operation und Maintenance Center)), für das Überwachungszentrum anstelle eines gesonderten Anfangs- und Endedatenblocks einen Gemeinschaftsdatenblock zu übertragen. Dieser Gemeinschaftsdatenblock enthält die Daten des Anfangs- und des Endedatenblocks und zusätzlich noch Angaben über den Grund des Nichtzustandekommens der Verbindung mit der Überwachungszentrale, der beispielsweise darin liegen kann, daß keine freien Verbindungsleitungen zwischen Vermittlungsstelle und Überwachungszentrale zur Verfügung standen. Der Überwachungszentrale wären damit wenigstens Informationen darüber zur Verfügung gestellt, daß zu einem überwachten Teilnehmeranschluß eine Fernsprechverbindung zu einem Partner-Anschluß bestanden hat.

## Patentansprüche

1. Verfahren zur gezielten Überwachung von Fernmeldeverbindungen in einer übergeordneten Überwachungszentrale, bei dem
a) in der Fernmeldevermittlungsstelle (EWSD1), an der der zu überwachende Teilnehmer einer Zweierverbindung angeschlossen ist, eine Dreierkonferenz zwischen den beiden Teilnehmern der Zweierverbindung und der Überwachungszentrale (MC) geschaltet wird, bei der jedoch die Verbindung mit der Überwachungszentrale nur unidirektional zu dieser hin gerichtet ist, **gekennzeichnet durch** folgende Merkmale:
b) nach Durchschaltung des vom Ausgang der genannten Vermittlungsstelle (EWSD1) zu der Überwachungszentrale (MC) führenden Übertragungsweges wird von dieser Vermittlungsstelle aus vor der eigentlichen Nutzinformationsübertragung im Nutzinformationsübertragungskanal ein Anfangsdatenblock zu der Überwachungszentrale (MC) übertragen, der eine Angabe (KP1,KP2) darüber, ob der rufende oder der gerufene Teilnehmer der Zweierverbindung überwacht wird, die Teilnehmernummer (A1 bis An; B1 bis Bn) dieses Teilnehmers und ein Blockendezeichen (ST) enthält,
c) im Falle einer zustandegekommenen Zweierverbindung erfolgt eine Nutzinformationsübertragung zu der Überwachungszentrale (MC)
d) nach Ende der Nutzinformationübertragung oder nach Verbindungsabbruch ohne Zustandekommemn einer Nutzinformationsübertragung wird von der Vermittlungstelle (EWSD1) des überwachten Teilnehmers aus ebenfalls im Nutzinformationsübertragungskanal ein Endedatenblock zur Überwachnungszentrale (MC) gesendet, der außer einer Kennung (KP3) am Anfang und einem Schlußzeichen (ST) eine Angabe (M1) über den erreichten Durchschaltezustand der Zweierverbindung, eine Angabe (M2) darüber ob die Zweierverbindung eine Normalverbindung war oder ob die überwachte Verbindung nach einer Rufumleitung zustande gekommenen war, sowie die Teilnehmernummer (A1 bis An; B1 bis Bn) des nicht überwachten Teilnehmers der Zweierverbindung enthält.

2. Verfahren nach Anspruch 1,
**dadurch gekennzeichnet, daß**
im Falle einer nach einfacher Anrufumleitung durch einen zu überwachenden Teilnehmer zustandegekommenen Zweierverbindung für die beiden Teilverbindungen gesondert ein Anfangs- und ein Endedatenblock übertragen werden, wobei die Anfangsdatenblöcke die Teilnehmernummer des überwachten umleitenden Teilnehmers enthalten, die jedoch im einen Fall als Teilnehmernummer eines gerufenen überwachten Teilnehmers und im anderen Fall als Teilnehmernummer eines rufenden überwachten Teilnehmers **gekennzeichnet** sind, und wobei der Endedatenblock der ersten Teilverbindung die Teilnehmernummer des nichtüberwachten rufenden Teilnehmers und der Endeblock der zweiten Teilverbindung die Teilnehmernummer des nicht überwachten Teilnehmmers enthält, zu dem die endgültige Umleitung geführt hat.

3. Verfahren nach Anspruch 2
**dadurch gekennzeichnet, daß**
im Falle einer weiteren Rufumleitung innerhalb derselben Vermittlungsstelle für die weitere Teilverbindung zwischen dem überwachten umleitenden Teilnehmer und dem dabei erreichten, eine nochmalige Umleitung veranlassenden Teilnehmer zwei weitere unmittelbar aufeinanderfolgende Anfangs- und Endedatenblockpaare übertragen werden, wobei die Anfangsdatenblöcke die Teilnehmernummer des überwachten umleitenden Teilnehmers bzw. des nochmals umleitenden als nicht überwacht gekennzeichneten Teilnehmers, und der erste dieser Endedatenblöcke die Teilnehmernummer des rufenden Teilnehmers und der zweite dieser Endedatenblöcke die Teilnehmernummer des Teilnehmers, zu dem die Umleitung schließlich geführt hat, jeweils zusammen mit den Hinweis auf eine stattgefundene Umleitung übertragen werden.

4. Verfahren nach einem der vorhergehenden Ansprüche,
**dadurch gekennzeichnet, daß**
bei Überwachung beider Teilnehmer einer Zweierverbindung, die an derselben Vermittlungsstelle angeschlossen sind, zwei Dreierkonferenzverbindungen der genannten Art geschaltet werden, und daß in den in diesem Zusammenhang über die betreffenden beiden Verbindungen zur Überwachungszentrale (MC) übertragenen Anfangs- und Endedatenblöcken von der einen Verbindung zur anderen die Teilnehmernummern von überwachtem und nichtüberwachtem Teilnehmer vertauscht sind.

5. Verfahren nach einem der vorhergehenden Ansprüche,
**dadurch gekennzeichnet, daß**
die Daten der Anfangs- und Endedatenblöcke in Form von Mehrfrequenzencodezeichen übertragen werden.

6. Verfahren nach einem der vorhergehenden Ansprüche,
**dadurch gekennzeichnet, daß**
dann wenn die Nutzinformationen Fernsprechinformationen sind, im Zuge der Herstellung einer Dreierkonferenzverbindung der Verbindungsaufbau zum gerufenen Fernsprechteilnehmer und zur Überwachungszentrale (MC) zeitgleich parallel durchgeführt werden.

7. Verfahren nach einem der Ansprüche 1 bis 5
**dadurch gekennzeichnet, daß**
dann wenn die Nutzinformationen FAX-Informationen oder Daten sind im Zuge der Herstellung einer Dreierverbindung zunächst der Verbindungsaufbau zum Überwachungszentrum (MC) und danach der Verbindungsaufbau zum gerufenen Teilnehmer durchgeführt wird.

8. Verfahren nach einem der Ansprüche 1 bis 7,
**dadurch gekennzeichnet, daß**
eine Überwachungsverbindung wie eine Verbindung zwischen dem zu überwachenden Teilnehmer und der Überwachungszentrale (MC) zu Lasten der Überwachungszentrale vergebührt wird.

9. Verfahren nach einem der Ansprüche 1 bis 7,
**dadurch gekennzeichnet, daß**
dann wenn im Zuge der Dreierkonferenzschaltung eine Verbindung zu der Überwachungszentrale (MC) nicht herstellbar ist, im Anschluß an eine zu überwachende Zweierverbindung über eine X-25-Schnittstelle ein Datenblock zu der Überwachungszentrale übertragen wird, der die Daten des Anfangs- und des Endedatenblocks und zusätzlich Angaben über den Grund des Nichtzustandekommens der Verbindung mit der Überwachunggszentrale enthält.

## Claims

1. Method for specifically monitoring telecommunication connections in a superordinate monitoring centre, in which
a) the telecommunication exchange (EWSD1) to which the subscriber to be monitored on a two-party connection is connected switches a three-way conversation between the two subscribers on the two-party connection and the monitoring centre (MC), but with the connection to the monitoring centre being directed only one way thereto,
**characterized by** the following features:
b) when the transmission path routed from the output of the cited exchange (EWSD1) to the monitoring centre (MC) has been switched through, a start data block is transmitted to the monitoring centre (MC) from this exchange before the actual useful information transmission in the useful information transmission channel, said start data block containing a statement (KP1, KP2) indicating whether the calling or the called subscriber on the two-party connection is being monitored, the subscriber number (A1 to An; B1 to Bn) of this subscriber and a block end character (ST),
c) in the event of a two-party connection having been set up, useful information is transmitted to the monitoring centre (MC),
d) after the end of useful information transmission or after connection termination with no useful information having been transmitted, an end data block is sent to the monitoring centre (MC) from the exchange (EWSD1) of the monitored subscriber, likewise in the useful information transmission channel, said end data block containing, besides an identifier (KP3) at the start and a termination character (ST), a statement (M1) relating to the switched-through state reached for the two-party connection, a statement (M2) indicating whether the two-party connection was a normal connection or whether the monitored connection had been set up after a call diversion, and also the subscriber number (A1 to An; B1 to Bn) of the unmonitored subscriber on the two-party connection.

2. Method according to Claim 1,
**characterized in that**,
in the case of a two-party connection which has been set up after single call diversion by a subscriber to be monitored, a start data block and an end data block are transmitted separately for the two connection paths, where the start data blocks contain the subscriber number of the monitored diverting subscriber, but with the subscriber number in one case being **characterized** as the subscriber number of a called monitored subscriber, and the subscriber number in the other case being **characterized** as the subscriber number of a calling monitored subscriber, and where the end data block of the first connection part contains the subscriber number of the unmonitored calling subscriber, and the end block of the second connection part contains the subscriber number of the unmonitored subscriber to whom the final diversion has led.

3. Method according to Claim 2,
**characterized in that**,
in the case of a further call diversion within the same exchange, two further directly successive start and end data block pairs are transmitted for the further connection part between the monitored diverting subscriber and the subscriber who has been reached in the process and who is initiating another diversion, where the start data blocks transmit the subscriber number of the monitored diverting subscriber or of the subscriber who is diverting again and is **characterized** as unmonitored, and the first of these end data blocks transmits the subscriber number of the calling subscriber, and the second of these end data blocks transmits the subscriber number of the subscriber to whom the diversion has finally led, in each case together with the indication of a diversion having taken place.

4. Method according to one of the preceding claims,
**characterized in that**,
when both subscribers on a two-party connection who are connected to the same exchange are monitored, two three-way conversation connections of the cited type are switched, and **in that**, in the start and end data blocks transmitted to the monitoring centre (MC) in this context via the relevant two connections, the subscriber numbers of the monitored subscriber and the unmonitored subscriber are changed round from one connection to the other.

5. Method according to one of the preceding claims,
**characterized in that**
the data of the start and end data blocks are transmitted in the form of multifrequency code signalling.

6. Method according to one of the preceding claims,
**characterized in that**,
if the useful information is telephone information, in the course of a three-way conversation connection being set up, the connections to the called telephone subscriber and to the monitoring centre (MC) are set up simultaneously in parallel.

7. Method according to one of Claims 1 to 5,
**characterized in that**,
if the useful information is FAX information or data, in the course of a three-party connection being set up, the connection to the monitoring centre (MC) is first set up and then the connection to the called subscriber is set up.

8. Method according to one of Claims 1 to 7,
**characterized in that**
a monitoring connection is billed like a connection between the subscriber to be monitored and the monitoring centre (MC) at the cost of the monitoring centre.

9. Method according to one of Claims 1 to 7,
**characterized in that**,
if, in the course of the three-way conversation switching, a connection to the monitoring centre (MC) cannot be set up, following a two-party connection to be monitored a data block is transmitted to the monitoring centre via an X-25 interface, said data block containing the data of the start and end data blocks and additionally statements relating to the reason for the connection to the monitoring centre not having been set up.

## Revendications

1. Procédé pour la surveillance ciblée de liaisons téléphoniques dans un central de surveillance principal, dans lequel
a) dans le central de commutation téléphonique (EWSD1) auquel est raccordé l'abonné à surveiller d'une liaison à deux abonnés, on commute une conférence à trois entre les deux abonnés de la liaison à deux et le central de surveillance (MC), la liaison avec le central de surveillance étant toutefois seulement unidirectionnelle vers le central de surveillance, **caractérisé par** les caractéristiques suivantes :
b) après la connexion de la voie de transmission allant de la sortie du central de commutation mentionné (EWSD1) au central de surveillance (MC), on transmet à partir de ce central de commutation et vers le central de surveillance (MC), avant la transmission d'informations utiles proprement dite, dans le canal de transmission d'informations utiles, un bloc de données de début qui contient une indication (KP1, KP2) indiquant si l'abonné appelant ou l'abonné appelé de la liaison à deux est surveillé, le numéro (A1 à An ; B1 à Bn) de cet abonné et un caractère de fin de bloc (ST),
c) dans le cas d'une liaison à deux réussie, on effectue une transmission d'informations utiles vers le central de surveillance (MC),
d) après la fin de la transmission d'informations utiles ou après l'interruption de la liaison sans qu'une transmission d'informations utiles ait réussi, le central de commutation (EWSD1) de l'abonné surveillé envoie également au central de surveillance (MC) dans le canal de transmission d'informations utiles un bloc de données de fin qui contient outre un identificateur (KP3) au début et un caractère de fin (ST) une indication (M1) sur l'état de connexion atteint de la liaison à deux, une indication (M2) indiquant si la liaison à deux était une liaison normale ou si la liaison surveillée a eu lieu après un transfert d'appel ainsi que le numéro (A1 à An ; B1 à Bn) de l'abonné non surveillé de la liaison à deux.

2. Procédé selon la revendication 1,
**caractérisé par le fait que**, dans le cas d'une liaison à deux ayant eu lieu après un transfert d'appel simple par un abonné à surveiller, on transmet séparément pour les deux liaisons partielles un bloc de données de début et un bloc de données de fin, les blocs de données de début contenant le numéro de l'abonné surveillé transférant, ce numéro étant toutefois **caractérisé** dans un cas comme le numéro d'un abonné surveillé appelé et dans l'autre cas comme le numéro d'un abonné surveillé appelant, et le bloc de données de fin de la première liaison partielle contenant le numéro de l'abonné appelant non surveillé et le bloc de données de fin de la deuxième liaison partielle contenant le numéro de l'abonné non surveillé auquel le transfert définitif mène.

3. Procédé selon la revendication 2,
**caractérisé par le fait que**, dans le cas d'un autre transfert d'appel à l'intérieur du même central de commutation, pour l'autre liaison partielle entre l'abonné transférant surveillé et l'abonné alors atteint et provoquant un autre transfert, on transmet deux autres couples de blocs de données de début et de fin se succédant directement, les blocs de données de début contenant le numéro de l'abonné transférant surveillé ou respectivement de l'abonné transférant encore une fois et **caractérisé** comme non surveillé et le premier de ces blocs de données de fin contenant le numéro de l'abonné appelant et le deuxième de ces blocs de données de fin contenant le numéro de l'abonné auquel le transfert a finalement mené, avec à chaque fois l'indication d'un transfert ayant eu lieu.

4. Procédé selon l'une des revendications précédentes,
**caractérisé par le fait que**, lors de la surveillance des deux abonnés d'une liaison à deux qui sont raccordés au même central de commutation, on commute deux liaisons de conférence à trois du type mentionné et, dans les blocs de données de début et de fin transmis dans ce contexte au central de surveillance (MC) par l'intermédiaire des deux liaisons considérées, les numéros d'abonné surveillé et d'abonné non surveillé sont permutés d'une liaison à l'autre.

5. Procédé selon l'une des revendications précédentes,
**caractérisé par le fait qu'**on transmet les données des blocs de données de début et de fin sous la forme de signaux à code multifréquence.

6. Procédé selon l'une des revendications précédentes,
**caractérisé par le fait que**, lorsque les informations utiles sont des informations téléphoniques, on effectue en même temps et en parallèle au cours de l'établissement d'une liaison de conférence à trois l'établissement de liaison vers l'abonné appelé et l'établissement de liaison vers le central de surveillance (MC).

7. Procédé selon l'une des revendications 1 à 5,
**caractérisé par le fait que**, lorsque les informations utiles sont des informations de télécopies ou des données, on effectue au cours de l'établissement d'une liaison à trois d'abord l'établissement de liaison vers le central de surveillance (MC) et ensuite l'établissement de liaison vers l'abonné appelé.

8. Procédé selon l'une des revendications 1 à 7,
**caractérisé par le fait qu'**on taxe une liaison de surveillance comme une liaison entre l'abonné à surveiller et le central de surveillance (MC) à la charge du central de surveillance.

9. Procédé selon l'une des revendications 1 à 7,
**caractérisé par le fait que**, si une liaison vers le central de surveillance (MC) ne peut pas être établie au cours de la commutation de conférence à trois, on transmet suite à une liaison à deux à surveiller, vers le central de surveillance et par l'intermédiaire d'une interface X-25, un bloc de données qui contient les données du bloc de données de début et du bloc de données de fin et en plus des indications sur la raison du non-établissement de la liaison avec le central de surveillance.
